# EUROPÄISCHE PATENTANMELDUNG

(11) **EP 2 380 865 A1**
(43) Veröffentlichungstag der Anmeldung: **26.10.2011**
(21) Anmeldenummer: 10004381.9
(22) Anmeldetag: 26.04.2010
(51) Int. Cl.: C05F 17/02, E04B 1/00

(54) **Anlage zur biologischen Aufbereitung organischen Materials**

(71) Anmelder: BACKHUS GmbH, 26188 Edewecht (DE)
(72) Erfinder: Backhus, Friedrich, 26188 Edenwecht (DE)
(74) Vertreter: Jabbusch, Matthias

(57) **Zusammenfassung**

Bei einer Anlage zur biologischen Aufbereitung organischen Materials mit wenigstens einer Kompostierzeile zur Aufnahme des organischen Materials und mit die Kompostierzeile seitlich begrenzenden Wandungen, ist vorgesehen, dass im Inneren der Wandungen Leitungskanäle für Medien angeordnet sind.

Mit dieser Anlage ist das Auftreten für die Verrottungsprozesse beeinträchtigen Störgrößen wirkungsvoll verhindert.

## Beschreibung

Die Erfindung betrifft eine Anlage zur biologischen Aufbereitung organischen Materials mit wenigstens einer Kompostierzeile zur Aufnahme des organischen Materials und mit die Kompostierzeile seitlich begrenzenden Wandungen.

Derartige Anlagen weisen regelmäßig mehrere parallel zueinander verlaufende Kompostierzeilen auf, in denen das organische Material mittels so genannter Umsetzmaschinen in regelmäßigen Zeitintervallen umgesetzt wird, um die Verrottungsprozesse zu beschleunigen. Dazu werden die spurgeführten Umsetzmaschinen auf den Wandungen der Kompostierzeilen hin und her verfahren, um so ein in das Innere einer Kompostierzeile hineinstehendes Werkzeug durch das organische Material hindurchzubewegen. Die Fahrspur wird dabei entweder von den Wandungen selbst oder von auf den Wandungen montierten Schienen ausgebildet.

Bekannte Anlagen haben jedoch den Nachteil, dass ergiebige Regenfälle oder starke Sonneneinstrahlung die in den Kompostierzeilen ablaufenden Verrottungsprozesse beeinträchtigen können. Um einer derartigen Beeinträchtigung entgegenzuwirken, ist es bekannt, die Kompostierzeilen mittels eines Witterungsschutzes, beispielsweise mit Folien, Planen oder steifen Deckelkonstruktionen, abzudecken. Ein Witterungsschutz hat jedoch den Nachteil, dass mit ihm die für einen optimalen Verrottungsprozess erforderliche Belüftung des organischen Materials nicht mehr gewährleistet ist. Weiterhin ist es bekannt, derartige Anlagen unter einer Dachkonstruktion zu betreiben. Dabei haben die Dachkonstruktionen jedoch den Nachteil, dass unter ihnen liegende Arbeitsbereiche eine nachteilig hohe Geruchsstoffbelastung aufweisen und dass sie in ihrer Errichtung nachteilig kostenintensiv sind.

Der Erfindung liegt die Aufgabe zu Grunde, eine Anlage der eingangs genannten Gattung aufzuzeigen, mit der das Auftreten von den Verrottungsprozessen beeinträchtigenden Störgrößen besonders wirkungsvoll verhindert ist.

Die erfindungsgemäße Anlage zeichnet sich dadurch aus, dass im Inneren der Wandungen Leitungskanäle für Medien angeordnet sind.

Erfindungsgemäße Leitungskanäle sind sowohl zur Ableitung von Regenwasser als auch zur Ent- und/oder Belüftung der Kompostierzeilen geeignet. Störgrößen, wie beispielsweise ergiebige Regenfälle, starke Sonneneinstrahlung, mangelhafte Belüftung oder eine Geruchsstoffbelastung werden durch gezieltes Zu- und Abführen der für die Störgrößen verantwortlichen Medien nachhaltig unterdrückt. Die Anordnung der Leitungskanäle im Inneren der Wandungen hat den Vorteil, dass die Leitungskanäle besonders wirkungsvoll vor Beschädigungen mit Umsetzwerkzeugen oder Reinigungsgeräten geschützt liegen.

Nach einer ersten Weiterbildung der Erfindung weisen die Wandungen jeder Kompostierzeile Betonfertigteile auf, in denen die Leitungskanäle angeordnet sind. Die Betonfertigteile sind insbesondere dazu geeignet, die Leitungskanäle mit passgenauen Anschlussstrukturen auszubilden. Derartige Anschlussstrukturen können aber auch Führungsflächen für die spurgeführten Umsetzmaschinen sein.

Nach einer nächsten Weiterbildung der Erfindung sind die Leitungskanäle mittels Rohrleitungsteilen hergestellt, die in die Betonfertigteile eingesetzt sind. Geeignete Rohrleitungsteile sind beispielsweise KG-Rohre, PVC-Rohre oder andere handelsverfügbare Rohre, die ein ausreichend breites Sortiment an Bögen, Abzweigern und Sonderteilen aufweisen. Das Einsetzen der Rohrleitungsteile in die Betonfertigteile erfolgt mit Vorteil derart passgenau, dass verbleibende Spaltmaße für den bestimmungsgemäßen Gebrauch der erfindungsgemäßen Anlage ohne Bedeutung sind.

Nach einer besonders vorteilhaften Weiterbildung der Erfindung weisen die Leitungskanäle aus dem Inneren der Kompostierzeile herausführende Entgasungsöffnungen auf. Derartige Entgasungsöffnungen dienen der kontrollierten Entlüftung der Kompostierzeilen. Um die Entgasungsöffnungen vor dem Dichtsetzen mit organischem Material zu schützen, sind diese bevorzugt im oberen Bereich der die Kompostierzeilen begrenzenden Wandungen angeordnet. Über die Entgasungsöffnungen wird von den Mikroorganismen verbrauchte Luft, die mit Kohlendioxid und Geruchsstoffen angereichert ist, abgeführt. Für eine Belüftung der Kompostierzeile sorgende Frischluftöffnungen sind bevorzugt im Bodenbereich, insbesondere jedoch in einer Solplatte der Kompostierzeilen angeordnet, so dass aus den Frischluftöffnungen austretende Frischluft durch das zu verrottende organische Material hindurchströmt und die im organischen Material enthaltenen Mikroorganismen mit Sauerstoff versorgt.

Um die erfindungsgemäße Anlage in besonders kurzen Bauzeiten errichten zu können, sind die Entgasungsöffnungen an den Betonfertigteilen ausgebildet. Damit entfällt vorteilhaft ein arbeitsintensives Positionieren und Einbringen von Entgasungsöffnungen in die Wandungen der Kompostierzeilen.

Nach einer anderen besonders vorteilhaften Weiterbildung der Erfindung weisen die Leitungskanäle in den oberen Stirnflächen der Wandungen liegende Abflussöffnungen auf. Derartige Abflussöffnungen dienen der kontrollierten Ableitung von Regenwasser. Dazu werden die Kompostierzeilen mittels eines Witterungsschutzes, insbesondere mittels steifer Deckelkonstruktionen abgedeckt, wobei auf die Deckelkonstruktionen auftreffendes Regenwasser auf direktem Wege zu den die Kompostierzeilen seitlich begrenzenden Wandungen abgeführt wird und von dort auf den Stirnflächen der Wandungen entlang zur nächstgelegenen Abflussöffnung fließen kann. Um das Regenwasser an einem oder mehreren Zentralpunkten der erfindungsgemäßen Anlage abzuleiten, sind die einzelnen Abflussöffnungen im Inneren der Wandungen über die ein Kanalnetz ausbildenden Leitungskanäle miteinander verbunden.

Um die Richtung der erfindungsgemäßen Anlage weiter zu vereinfachen, sind auch die Abflussöffnungen an den Betonfertigteilen ausgebildet. Auf diese Weise kann vorteilhaft ein arbeitsintensives Ausrichten und Einbringen der Abflussöffnungen in die die Kompostierzeilen begrenzenden Wandungen entfallen.

Nach einer nächsten Weiterbildung der Erfindung weisen die Wandungen an ihren oberen Stirnflächen ausgebildete Führungsschienen auf. Die Führungsschienen dienen der Spurführung der auf den Kompostierzeilen verfahrbaren Umsetzmaschinen. Es liegt jedoch im Rahmen der Erfindung, die die Kompostierzeilen begrenzenden Wandungen ohne Führungsschienen auszubilden, beispielsweise wenn das Fahrwerk der auf den Wandungen zu verfahrenden Umsetzmaschine diese nicht erforderlich macht.

Die Führungsschienen sind mittels wenigstens einer in den Stirnflächen liegenden Profilierung ausgebildet. Vorzugsweise weist die Profilierung eine in ihrem Querschnitt trapezförmige Gestalt auf, wobei die Trapezform als Negativform, beispielsweise als in den Stirnflächen liegende Rille oder als Positivform, beispielsweise als auf den Stirnflächen aufliegende Rippe ausgebildet ist.

Um die Transportkosten für die zur Errichtung der erfindungsgemäßen Anlage erforderlichen Wandungen möglichst klein zu halten, weisen die Wandungen wenigstens eine mit Ortbeton gefüllte Schalung auf. Die Schalung besteht vorzugsweise aus filigranen Stahlbetonplatten, mit denen eine den Ortbeton aufnehmende Form ausgebildet ist.

Entsprechend der in den Betonfertigteilen angeordneten Leitungskanäle sind die Leitungskanäle außerdem mittels Rohrleitungsteilen hergestellt, die in den Ortbeton eingegossen sind. Geeignete Rohrleitungsteile sind auch hier KG-Rohre, PVC-Rohre oder andere handelsverfügbare Rohre, die ein ausreichend breites Sortiment an Bögen, Abzweigern und Sonderteilen aufweisen. Dem Eingießen der Rohrleitungsteile in den Ortbeton geht voraus, dass die Rohrleitungen im Inneren der Schalung verlegt und, entsprechend der Abstände der in den Betonfertigteilen angeordneten Leitungskanäle zueinander, ausgerichtet werden.

Eine belastbare Verbindung zwischen den Betonfertigteilen und der mit Ortbeton gefüllten Schalung zu einer ganzheitlichen Wandung ist dadurch erreicht, dass die Betonfertigteile und der Ortbeton über eine Bewährung miteinander vergossen sind.

Weiterhin ist vorgesehen, dass die in die Betonfertigteile eingesetzten Rohrleitungsteile und die in den Ortbeton eingegossenen Rohrleitungsteile über Steckverbindungen miteinander verbunden sind. Die Steckverbindungen werden vorzugsweise vor dem Einfüllen des Ortbetons in die Schalung geschlossen, so dass zwischen den Steckteilen verbliebene Toleranzen von den im Inneren der Schalung flexibel verlegten Rohrleitungsteilen ausgeglichen werden können.

Nach einer anderen Weiterbildung der Erfindung weisen die Betonfertigteile in den Ortbeton führende Einfüllschächte sowie Verdichtungsschächte auf. Die Einfüllschächte haben beim Errichten der erfindungsgemäßen Anlage dem Einfüllen des Ortbetons in die Schalung gedient und die Verdichtungsschächte haben dem Einführen von Rüttlern gedient, mit denen der frisch eingefüllte Ortbeton verdichtet wurde. Um eine besonders gleichmäßige Befüllung und Verdichtung des Ortbetons zu erreichen, weisen die Betonfertigteile vorzugsweise in regelmäßigen Abständen zueinander angeordnete Einfüllschächte und Verdichtungsschächte auf. Eigenständiger Schutz wird für ein Betonfertigteil zur Verwendung in der erfindungsgemäßen Anlage beansprucht.

Ein Ausführungsbeispiel der Erfindung, aus dem sich weitere erfinderische Merkmale ergeben, ist in der Zeichnung dargestellt. Es zeigen:
- Fig. 1:: eine Teilansicht der erfindungsgemäßen Anlage mit einer Umsetzmaschine im Schnitt; und
- Fig. 2:: eine perspektivische Ansicht eines Betonfertigteils für die erfindungsgemäße Anlage gemäß Fig. 1.

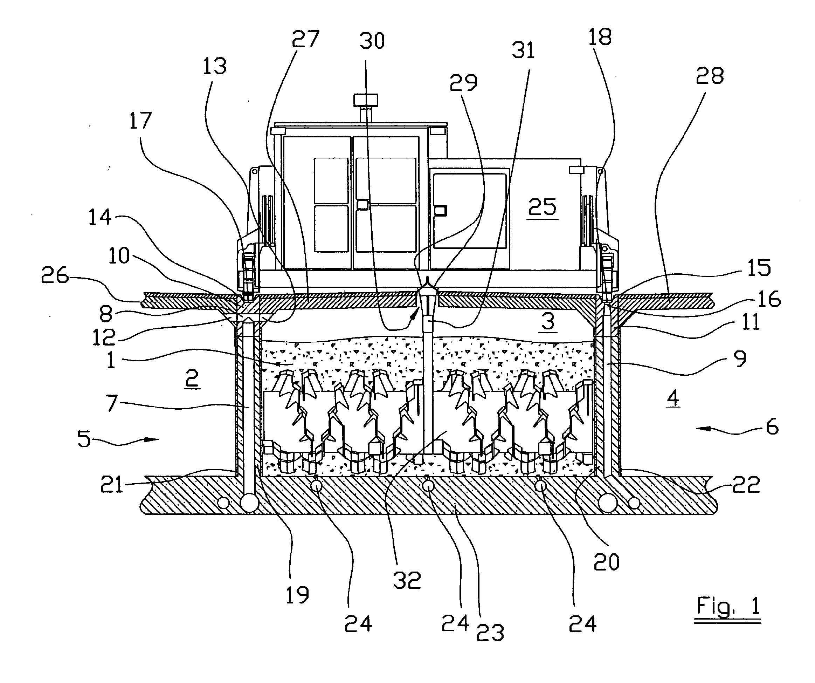

Die Fig. 1 zeigt eine vertikal geschnittene Teilansicht der erfindungsgemäßen Anlage zur biologischen Aufbereitung organischen Materials 1 mit mehreren Kompostierzeilen 2, 3, 4 zur Aufnahme des organischen Materials 1 und mit den Kompostierzeilen seitlich begrenzenden Wandungen 5, 6, in deren inneren Leitungskanäle 7, 8, 9 für Medien angeordnet sind. Die Wandungen 5, 6 jeder Kompostierzeile 2, 3, 4 weisen Betonfertigteile 10, 11 auf, in denen die Leitungskanäle 7, 9 angeordnet sind. Die Leitungskanäle 7, 9 sind mittels Rohrleitungsteilen hergestellt, die in die Betonfertigteile 10, 11 eingesetzt sind. Jeder Leitungskanal 7 weist aus dem Inneren der Kompostierzeilen 2, 3, 4 herausführende Entgasungsöffnungen 12, 13 auf, die an den Betonfertigteilen 10, 11 ausgebildet sind. Die Leitungskanäle 9 weisen hingegen in den oberen Stirnflächen 14, 15 der Wandungen 5, 6 liegende Abflussöffnungen 16 auf. Die Abflussöffnungen 16 sind ebenfalls an den Betonfertigteilen 10, 11 ausgebildet. Die die Kompostierzeilen 2, 3, 4 begrenzenden Wandungen 5, 6 weisen an ihren oberen Stirnflächen 14, 15 ausgebildete Führungsschienen 17, 18 auf, welche durch wenigstens eine in den Stirnflächen 14, 15 angeordnete, im Querschnitt trapezförmige Rille ausgebildet sind. Außerdem weisen die Wandungen 5, 6 jeweils eine mit Ortbeton 19, 20 gefüllte Schalung 21, 22 auf, wobei die Leitungskanäle 7, 8, 9 außerdem mittels Rohrleitungsteilen hergestellt sind, die in den Ortbeton 19, 20 eingegossen sind. Die untere Begrenzung der erfindungsgemäßen Anlage wird von einer Solplatte 23 ausgebildet, in welcher Belüftungskanäle 24 zur Belüftung des organischen Materials 1 angeordnet sind. Weiterhin zeigt die Figur 1 eine auf den Führungsschienen 17, 18 verfahrene Umsetzmaschine 25 sowie die Kompostierzeilen 2, 3, 4 verschließende Deckel 26, 27, 28, die jeweils einen mittels Dichtlippen 29 verschlossenen Arbeitsspalt 30 zum Durchführen des an einem Schwert 31 gehaltenen Umsetzwerkzeuges 32 aufweisen.

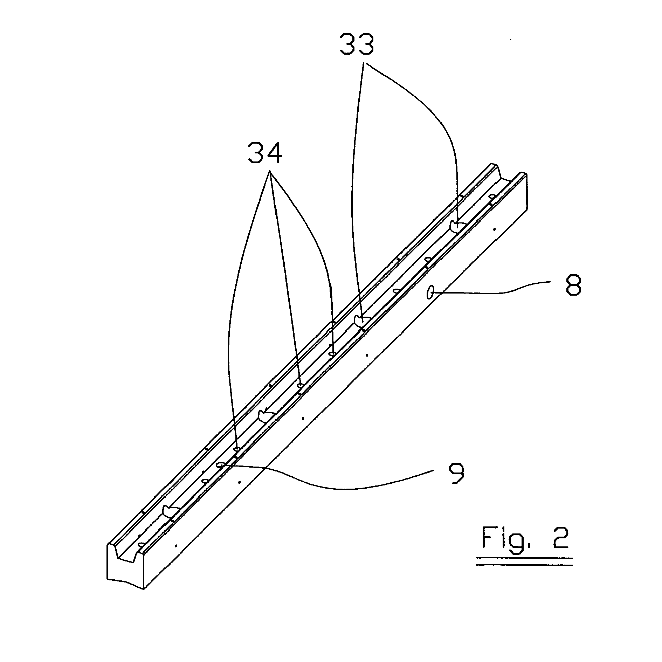

Die Fig. 2 zeigt eine perspektivische Darstellung eines Betonfertigteils 10 für die erfindungsgemäße Anlage gemäß Fig. 1. In dem Betonfertigteil 10 sind Leitungskanäle 8, 9 angeordnet, die mit nicht dargestellten Rohrleitungsteilen formschlüssig zusammenwirken. Außerdem weist das Betonfertigteil 10 in regelmäßigen Abständen angeordnete Einfüllschächte 33 sowie in regelmäßigen Abständen angeordnete Verdichtungsschächte 34 auf.

## Patentansprüche

1. Anlage zur biologischen Aufbereitung organischen Materials mit wenigstens einer Kompostierzeile zur Aufnahme des organischen Materials und mit die Kompostierzeile seitlich begrenzenden Wandungen,
**dadurch gekennzeichnet,**
**dass** im Inneren der Wandungen (5, 6) Leitungskanäle (7, 8, 9) für Medien angeordnet sind.

2. Anlage nach Anspruch 1, **dadurch gekennzeichnet, dass** die Wandungen jeder Kompostierzeile (2, 3, 4) Betonfertigteile (10, 11) aufweisen, in denen die Leitungskanäle (7, 8, 9) angeordnet sind.

3. Anlage nach Anspruch 2, **dadurch gekennzeichnet, dass** die Leitungskanäle (7, 8, 9) mittels Rohrleitungsteilen hergestellt sind, die in die Betonfertigteile (10, 11) eingesetzt sind.

4. Anlage nach einem der Ansprüche 1 bis 3, **dadurch gekennzeichnet, dass** die Leitungskanäle (7, 8, 9) aus dem Inneren der Kompostierzeile (2, 3, 4) herausführende Entgasungsöffnungen (12, 13) aufweisen.

5. Anlage nach Anspruch 4, **dadurch gekennzeichnet, dass** die Entgasungsöffnungen (12, 13) an den Betonfertigteilen (10, 11) ausgebildet sind.

6. Anlage nach einem der Ansprüche 1 bis 5, **dadurch gekennzeichnet, dass** die Leitungskanäle in den oberen Stirnflächen (14, 15) der Wandungen liegende Abflussöffnungen (16) aufweisen.

7. Anlage nach Anspruch 6, **dadurch gekennzeichnet, dass** die Abflussöffnungen (16) an den Betonfertigteilen (10, 11) ausgebildet sind.

8. Anlage nach einem der Ansprüche 1 bis 7, **dadurch gekennzeichnet, dass** die Wandungen (5, 6) an ihren oberen Stirnflächen (14, 15) ausgebildete Führungsschienen (17, 18) aufweisen.

9. Anlage nach Anspruch 8, **dadurch gekennzeichnet, dass** die Führungsschienen (17, 18) durch wenigstens eine in den Stirnflächen (14, 15) liegende Profilierung ausgebildet sind.

10. Anlage nach einem der Ansprüche 1 bis 9, **dadurch gekennzeichnet, dass** die Wandungen (5, 6) wenigstens eine mit Ortbeton (19, 20) gefüllte Schalung (21, 22) aufweisen.

11. Anlage nach Anspruch 10, **dadurch gekennzeichnet, dass** die Leitungskanäle mittels Rohrleitungsteilen hergestellt sind, die in den Ortbeton (19, 20) eingegossen sind.

12. Anlage nach Anspruch 10 oder 11, **dadurch gekennzeichnet, dass** die Betonfertigteile und der Ortbeton über eine Bewährung miteinander vergossen sind.

13. Anlage nach Anspruch 11 oder 12, **dadurch gekennzeichnet, dass** die in die Betonfertigteile (10, 11) eingesetzten Rohrleitungsteile und die in den Ortbeton (19, 20) eingegossenen Rohrleitungsteile über Steckverbindungen miteinander verbunden sind.

14. Anlage nach einem der Ansprüche 2 bis 13, **dadurch gekennzeichnet, dass** die Betonfertigteile (10, 11) in den Ortbeton (19, 20) führende Einfüllschächte (33) und/oder Verdichtungsschächte (34) aufweisen.

15. Betonfertigteil zur Verwendung in einer Anlage nach einem der Ansprüche 1 bis 14.
